# EUROPÄISCHE PATENTSCHRIFT

(11) **EP 3 272 220 B1**
(45) Veröffentlichungstag und Bekanntmachung des Hinweises auf die Patenterteilung: **09.10.2019**
(21) Anmeldenummer: 16180298.8
(22) Anmeldetag: 20.07.2016
(51) Int. Cl.: A21C 15/00, A21C 15/02

(54) **BACKMASCHINE UND WICKELVORRICHTUNG**
BAKING MACHINE AND WINDING DEVICE
MACHINE DE BOULANGERIE ET DISPOSITIF D'ENROULEMENT

(43) Veröffentlichungstag der Anmeldung: 24.01.2018
(73) Patentinhaber: Haas Food Equipment GmbH, 1210 Wien (AT)
(72) Erfinder: JIRASCHEK, Stefan, 2202 Königsbrunn (AT); DOLEZEL, Ralf, 1220 Wien (AT); BIBARIC, Markus, 3400 KIERLING (AT); STEINBÖCK, Michael, 3042 Holzleiten (AT)
(74) Vertreter: Puchberger & Partner Patentanwälte

(56) Entgegenhaltungen:
- WO-A1-99/41995
- WO-A1-2011/086058
- ES-A1- 2 242 502
- FR-A- 1 355 832
- GB-A- 2 107 964
- US-A- 3 934 043

## Beschreibung

Die Erfindung betrifft eine Wickelvorrichtung und eine Backmaschine gemäß den Oberbegriffen der unabhängigen Patentansprüche.

Backmaschinen, insbesondere Ringbackmaschinen, zur kontinuierlichen Herstellung von Waffelröllchen sind seit langer Zeit bekannt und publiziert.

Die Erfindung betrifft insbesondere eine Backmaschine, wie sie beispielsweise in den Publikationen AT 381 440 B, AT 514 571 B1, EP 1 175 150 B1, AT 409 703 B, AT 413 177 B beschrieben ist, wobei eine neuartige Wickelvorrichtung eingesetzt wird.

Herkömmliche Ringbackmaschinen umfassen eine kontinuierlich um ihre Drehachse gedrehte, zylindrische Backfläche, auf der im warmen Zustand plastisch verformbare Waffelbänder gebacken werden, die in weiterer Folge durch eine Abnahme- und Wickelvorrichtung von der zylindrischen Backfläche abgenommen und aufgerollt werden. Das Aufrollen bzw. Aufwickeln des Waffelbands geschieht bei einer kontinuierlichen Fortbewegung des zu bildenden Röllchens zwischen einem drehbar angetriebenen Rolldorn und einer Andrückwalze der Wickelvorrichtung. Dadurch wird eine im Wesentlichen endlose Waffelrolle gebildet, die in vordefinierten Abständen zu Waffelröllchen abgelängt wird.

Gemäß Stand der Technik sind auch Wickelvorrichtungen bekannt, mit denen beim Aufwickeln des Waffelbands eine Creme in das Innere der Waffelröllchen eingebracht werden kann. Je nach Anwendungsfall kann es hierfür notwendig sein, dass die in das Waffelröllchen einzubringende Creme einen gewissen Temperaturwert nicht unter- oder überschreitet, womit eine Temperierung des Massenkanals und/oder des Rolldorns der Wickelvorrichtung notwendig ist. Grund dafür ist, dass der Rolldorn eine außenliegende Wickelfläche aufweist, die direkt an dem heißen Waffelband anliegt. Es ist unvermeidbar, dass Wärme von dem heißen Waffelband auf diese Wickelfläche übertragen wird.

Bei einer mittigen Anordnung eines Massenkanals mit größerem Durchmesser kann aus fertigungstechnischen Gründen bisher nicht vermieden werden, dass der Massenkanal zumindest abschnittsweise an der außenliegenden Wand des Rolldorns anliegt.

Herkömmliche Vorrichtungen sind beispielsweise aus der FR 1355832 A, der WO 2011/086058 A1, der US 3,934,043 A, der ES 2242502 A1 und der GB 2107964 A bekannt.

Aus der angeführten FR 1355832 A ist eine Vorrichtung bekannt, wobei nur die Behälter, in welchen die Aromastoffe aufbewahrt werden, beheizbar sind.

Aus der angeführten WO 2011/086058 A1 sind gefrorene Süßwaren mit Schichtstruktur und eine Herstellungsvorrichtung dafür bekannt, wobei zwei entlang der Hauptachse verlaufende isolierte Eiscreme-Passagen, zwei außenliegende Schokoladen-Passagen und eine zwischen der Isolationsschicht den Eiscreme-Passagen und den Schokoladen-Passagen liegende Heißluft-Passage vorgesehen sind.

Aufgabe der Erfindung ist es nun, eine Wickelvorrichtung und eine Backmaschine, insbesondere eine Ringbackmaschine, zu schaffen, durch die die Nachteile des Standes der Technik überwunden werden. Dies umfasst insbesondere, dass die Wickelvorrichtung dazu geeignet ist, auch temperatursensible Massen in ausreichender Qualität und Quantität in die Waffelröllchen einzubringen.

Die erfindungsgemäße Aufgabe wird insbesondere durch die Merkmale der unabhängigen Patentansprüche gelöst.

Die Erfindung betrifft insbesondere eine Wickelvorrichtung zum kontinuierlichen Herstellen von an ihrer Innenseite mit einer Masse wie beispielsweise einer essbaren Creme versehenen, essbaren Waffelröllchen, wobei die Wickelvorrichtung einen entlang einer Hauptachse verlaufenden Rolldorn umfasst, wobei der Rolldorn einen gelagerten Abschnitt und einen auskragenden Abschnitt mit einem freien Ende umfasst, wobei der Rolldorn in seinem auskragenden Abschnitt quer zur Hauptachse von einer zylindrischen Wickelwand begrenzt ist, wobei die zylindrische Wickelwand eine außenliegenden Wickelfläche aufweist, die zur Anlage und zum Einrollen eines warmen, plastisch verformbaren Waffelbands eingerichtet ist und über die im Betrieb durch die Anlage des Waffelbands ein Wärmetransport erfolgt, wobei im Inneren der zylindrischen Wickelwand ein entlang der Hauptachse verlaufender Massenkanal zum Einbringen einer Masse in den Innenraum eines endlosen hülsenförmigen Hohlkörpers bzw. der Waffelröllchen vorgesehen ist, wobei der Massenkanal im Bereich des freien Endes aus dem Rolldorn austritt, wobei der Massenkanal von einer Massenkanalwand begrenzt wird, und/oder wobei im Inneren der zylindrischen Wickelwand mindesten ein Temperierkanal zur Leitung eines Temperiermediums vorgesehen ist, Gegebenenfalls ist vorgesehen, dass sich der Temperierkanal von dem gelagerten Abschnitt des Rolldorns in den auskragenden Abschnitt des Rolldorns und wieder zurück in den gelagerten Abschnitt des Rolldorns erstreckt. Gegebenenfalls ist vorgesehen, dass der Temperierkanal zwischen dem Massenkanal und der Wickelwand verläuft. Gegebenenfalls ist vorgesehen, dass der Temperierkanal um Wesentlichen U-förmig ausgebildet ist und sich bevorzugt als geschlossene Leitung von dem gelagerten Abschnitt des Rolldorns in den auskragenden Abschnitt des Rolldorns und wieder zurück in den gelagerten Abschnitt des Rolldorns erstreckt.
Gegebenenfalls ist vorgesehen, dass der Temperierkanal einen ersten Abschnitt umfasst, der sich im Inneren der Wickelwand entlang der Hauptachse von dem gelagerten Abschnitt des Rolldorns in den auskragenden Abschnitt des Rolldorns erstreckt
Gegebenenfalls ist vorgesehen, dass der Temperierkanal einen dem ersten Abschnitt nachgeordneten zweiten Abschnitt umfasst, der sich im Inneren der Wickelwand entlang der Hauptachse von dem auskragenden Abschnitt des Rolldorns wieder zurück in den gelagerten Abschnitt des Rolldorns erstreckt.

Gegebenenfalls ist vorgesehen, dass der Temperierkanal zumindest teilweise von der Massenkanalwand und von der Wickelwand begrenzt oder gebildet ist. Gegebenenfalls ist vorgesehen, dass die Wickelwand einen kreisförmigen oder kreisrunden Querschnitt aufweist, dass der Massenkanal im Inneren der Wickelwand einen länglichen Querschnitt aufweist, und/oder dass der Temperierkanal in dem freien Querschnitt zwischen der Massenkanalwand des Massenkanals und der Wickelwand angeordnet ist.

Gegebenenfalls ist vorgesehen, dass die Wickelwand einen kreisrunden oder kreisförmigen Querschnitt aufweist, dass der Massenkanal und/oder die Massenkanalwand im Bereich der Wickelwand einen länglichen Querschnitt aufweist, wobei sich der längliche Querschnitt entlang einer ersten Querschnittsachse von der einen Seite der Wickelwand bis zur gegenüberliegenden Seite der Wickelwand erstreckt, und wobei zwischen dem länglichen Querschnitt der Massenkanalwand und der Wickelwand entlang einer in der Querschnittsebene normal zur ersten Querschnittsachse verlaufenden zweiten Querschnittsachse ein freier Querschnitt vorgesehen ist, in dem der Temperierkanal angeordnet ist.

Gegebenenfalls ist vorgesehen, dass die Wickelwand einen kreisrunden oder kreisförmigen Querschnitt aufweist, dass der Massenkanal und/oder die Massenkanalwand im Bereich der Wickelwand einen länglichen Querschnitt aufweist, wobei sich der längliche Querschnitt entlang einer ersten Querschnittsachse von der einen Seite der Wickelwand bis zur gegenüberliegenden Seite der Wickelwand erstreckt, und wobei zwischen dem länglichen Querschnitt der Massenkanalwand und der Wickelwand entlang einer in der Querschnittsebene normal zur ersten Querschnittsachse verlaufenden zweiten Querschnittsachse ein freier Querschnitt vorgesehen ist, in dem nebeneinander, der Hauptachse folgend, der erste Abschnitt und der zweite Abschnitt des Temperierkanals angeordnet sind.

Gegebenenfalls ist vorgesehen, dass im Inneren der zylindrischen Wickelwand zwei Temperierkanäle zur Leitung eines Temperiermediums vorgesehen sind, die beide gemäß der vorangegangenen und der nachfolgenden Beschreibung ausgebildet sind. Gegebenenfalls ist vorgesehen, dass im Inneren der zylindrischen Wickelwand zwei Temperierkanäle zur Leitung eines Temperiermediums vorgesehen sind, die beide nach einem der vorangegangenen Ansprüche ausgebildet sind, dass der Massenkanal im Inneren der Wickelwand einen länglichen Querschnitt aufweist, und/oder dass die beiden Temperierkanäle beidseitig des Massenkanals in den freien Querschnitten zwischen der Massenkanalwand des Massenkanals und der Wickelwand angeordnet sind.
Gegebenenfalls ist vorgesehen, dass der Rolldorn um die Hauptachse drehbar oder drehbar angetrieben angeordet ist, dass der Rolldorn im Bereich seines gelagerten Abschnitts von einer Zuführringkammer zur Zuführung des Temperiermediums in den Temperierkanal des drehenden Rolldorns umgeben ist, und dass der Rolldorn im Bereich seines gelagerten Abschnitts, insbesondere beabstandet von der Zuführringkammer, von einer Ableitringkammer zur Ableitung des Temperiermediums aus dem Temperierkanal des drehenden Rolldorns umgeben ist.
Gegebenenfalls ist vorgesehen, dass der Temperierkanal einen ersten Abschnitt umfasst, der sich im Inneren der Wickelwand entlang der Hauptachse von dem gelagerten Abschnitt des Rolldorns in den auskragenden Abschnitt des Rolldorns erstreckt, dass der Temperierkanal einen dem ersten Abschnitt nachgeordneten zweiten Abschnitt umfasst, der sich im Inneren der Wickelwand entlang der Hauptachse von auskragenden Abschnitt des Rolldorns wieder zurück in den gelagerten Abschnitt des Rolldorns erstreckt, dass sich der erste Abschnitt bis in den gelagerten Abschnitt des Rolldorns erstreckt und dort in radialer Richtung oder schräg in die Zuführringkammer mündet und/oder dass sich der zweite Abschnitt bis in den gelagerten Abschnitt des Rolldorns erstreckt und dort in radialer Richtung in die Ableitringkammer mündet.
Gegebenenfalls ist vorgesehen, dass eine um eine Nebenachse drehbare oder drehbar angetriebene Andrückwalze vorgesehen ist.
Gegebenenfalls betrifft die Erfindung eine Backmaschine, insbesondere eine Ringbackmaschine, zum kontinuierlichen Herstellen von essbaren Waffelröllchen mit zumindest einer, kontinuierlich umlaufenden, beheizten Backfläche zum Backen von zumindest einem, endlosen, im warmen Zustand plastisch verformbaren Waffelband aus flüssigem, zuckerhaltigem Waffelteig und mit einer Verarbeitungsstation, in der für jedes gebackene Waffelband jeweils eine der Backfläche benachbarte Abnahmevorrichtung, eine dieser Abnahmevorrichtung nachgeordnete erfindungsgemäße Wickelvorrichtung zum Erzeugen eines endlosen hülsenförmigen Hohlkörpers und eine der Wickelvorrichtung nachgeordnete Schneidvorrichtung zum Ablängen des hülsenförmigen Hohlkörpers in einzelne Waffelröllchen vorgesehen ist.

Gegebenenfalls ist vorgesehen, dass die oder jede Wickelvorrichtung einen zur Bahn des betreffenden gebackenen Waffelbandes schräg angeordneten Wickelspalt besitzt, der zwischen zwei gegensinnig rotierenden Wickelorganen ausgebildet ist, von denen ein Wickelorgan als Rolldorn ausgebildet ist, um den herum das gebackene Waffelband schraubenförmig überlappend zu einem endlosen hülsenförmigen Hohlkörper gewickelt wird, und das andere Wickelorgan als Andrückwalze ausgebildet ist, die das gebackene Waffelband gegen den rotierenden Rolldorn drückt.

Der hülsenförmige Hohlkörper ist in allen Ausführungsformen bevorzugt als gerollte oder gewickelte Waffelrolle ausgebildet.

Gegebenenfalls ist vorgesehen, dass die Wickelwand einen kreisförmigen oder kreisrunden Querschnitt aufweist, dass der Massenkanal im Inneren der Wickelwand einen konzentrisch zur Wickelwand angeordneten runden Querschnitt aufweist, und/oder dass der Temperierkanal in dem freien, insbesondere ringförmig ausgebildeten, Querschnitt zwischen der Massenkanalwand des Massenkanals und der Wickelwand angeordnet ist.
Gegebenenfalls ist vorgesehen, dass der Temperierkanal zumindest abschnittsweise spiralförmig oder helixförmig zwischen der Massenkanalwand des Massenkanals und der Wickelwand verläuft.

Die erfindungsgemäße Wickelvorrichtung umfasst einen Rolldorn, der über einen speziell ausgeformten Temperierkanal temperiert, bevorzugt gekühlt oder gegebenenfalls erwärmt wird. In allen Ausführungsformen kann vorgesehen sein, dass in einem Rolldorn mehrere Temperierkanäle vorgesehen sind. Diese Temperierkanäle können gleichartig und insbesondere symmetrisch in oder am Rolldorn vorgesehen sein.

Das Temperiermedium, beispielsweise ein Temperierfluid wie Wasser, weist bevorzugt eine geringere Viskosität auf als die in die Waffelröllchen einzubringende Masse. Dadurch kann der Temperierkanal zur Leitung des Temperiermediums zumindest bereichsweise enger bzw. schmaler ausgebildet sein als der Massenkanal zur Zuführung der Masse. Der Massenkanal ist bevorzugt derart ausgebildet, dass sein Querschnitt abgerundet ausgebildet ist und insbesondere keine schmalen, engen oder spitzen Bereiche umfasst. Gegebenenfalls kann das Temperiermedium auch gasförmig oder insbesondere Luft oder Druckluft sein.

Bevorzugt kann in allen Ausführungsformen das Temperiermedium zur Kühlung des Rolldorns oder der in dem Rolldorn befindlichen Masse durch den Temperierkanal gefördert werden. Gegebenenfalls kann in allen Ausführungsformen das Temperiermedium zur Beheizung des Rolldorns oder der in dem Rolldorn befindlichen Masse durch den Temperierkanal gefördert werden.

Bevorzugt umfasst der Rolldorn einen gelagerten Abschnitt und einen auskragenden Abschnitt, wobei der gelagerte Abschnitt insbesondere ein Abschnitt des Rolldorns ist, in dem er von einem weiteren Element der Vorrichtung, wie beispielsweise von einem Kugellager, einem Gleitlager oder von einer Ringkammer zur Zu- oder Abführung des Temperiermediums umgeben oder umgriffen ist. Der auskragende Abschnitt ist insbesondere jener Abschnitt des Rolldorns, in dem die Wickelfläche vorgesehen ist.

Die herzustellenden Waffelröllchen sind bevorzugt an ihrer Innenseite mit einer Masse, wie beispielsweise mit einer essbaren Creme, insbesondere einer Schokoladencreme oder einer Fettcreme, versehen. Die Waffelröllchen können mit einem Überzug versehen sein, der die Innenseite der Waffelröllchen vollständig oder teilweise auskleidet. Gegebenenfalls sind die Waffelröllchen teilweise oder vollständig mit einer Masse gefüllt.

Der Rolldorn umfasst bevorzugt einen auskragenden Abschnitt und einen gelagerten Abschnitt und ragt von dem gelagerten Abschnitt aus, sodass ein freies Ende gebildet ist. Am auskragenden Abschnitt des Rolldorns ist zumindest abschnittsweise eine zylindrische Wickelwand vorgesehen, die an ihrer Außenseite eine Wickelfläche trägt. Im Betrieb liegt das heiße bzw. warme, verformbare Waffelband zur Bildung der Waffelröllchen an dieser Wickelfläche an.

Um eine Temperierung des Rolldorns zu ermöglichen, ist mindestens ein Temperierkanal vorgesehen, der zur Leitung eines Temperiermediums eingerichtet ist. Bevorzugt sind zwei oder mehrere Temperierkanäle vorgesehen, um eine verbesserte Temperierung bzw. Temperierleistung zu ermöglichen. Ferner ist im Rolldorn ein Massenkanal zur Zuführung einer Masse vorgesehen, wobei der Massenkanal, insbesondere im Bereich des freien Endes aus dem Rolldorn austritt.

Der oder die Temperierkanäle sind hingegen im Wesentlichen geschlossen ausgebildet und erstrecken sich von dem gelagerten Abschnitt in einen auskragenden Abschnitt und wieder zurück in den gelagerten Abschnitt. Ein Austritt des Temperiermediums auf oder in das zu bildende Waffelröllchen ist durch die geschlossene Ausbildung des Temperatierkanals verhindert. Der Temperierkanal ist jedoch bevorzugt im gelagerten Abschnitt geöffnet oder aus dem Rolldorn geführt. Insbesondere erstreckt sich der Temperierkanal in radialer Richtung oder schräg aus dem Rolldorn in eine diesen Bereich umgebende Ringkammer. Die Ringkammer ermöglicht eine kontinuierliche Zuführung des Temperiermediums in einen sich drehenden Rolldorn.

Der Temperierkanal ist im Wesentlichen U-förmig ausgebildet. Dies bedeutet insbesondere, dass er sich, wie weiter oben beschrieben, von dem gelagerten Abschnitt in den auskragenden Abschnitt und U-förmig gewendet zurück vom auskragenden in den gelagerten Abschnitt erstreckt. Dazu weist der Temperierkanal einen ersten Abschnitt und einen zweiten Abschnitt auf. Der erste Abschnitt erstreckt sich von dem gelagerten Abschnitt in den auskragenden Abschnitt. Nach dem Wendepunkt oder insbesondere bei der Rückführung des Temperiermediums durchströmt selbiges den zweiten Abschnitt, der sich aus dem auskragenden Abschnitt des Rolldorns zurück in den gelagerten Abschnitt des Rolldorns erstreckt. Der erste Abschnitt ist dabei strömungsmäßig den zweiten Abschnitt vorgeordnet.

Der Temperierkanal ist bevorzugt zumindest teilweise von der Massenkanalwand, insbesondere von der Außenseite der Massenkanalwand begrenzt. Bevorzugt ist der Temperierkanal auch zumindest abschnittsweise bzw. teilweise von der Wickelwand, insbesondere von der Innenseite der Winkelwand, begrenzt.

Die Wickelwand weist bevorzugt einen kreisrunden Querschnitt auf. Dieser kreisrunde Querschnitt entsteht insbesondere durch eine zylinderförmige Ausgestaltung der Wickelwand, deren Rotationskörperachse bevorzugt die Hauptachse ist, um die auch der Rolldorn im Betrieb gedreht wird. Der Massenkanal hingegen weist gemäß einer bevorzugten Ausführungsform einen länglichen Querschnitt auf, der in den runden Querschnitt der Wickelwand eingeschlossen ist. Insbesondere weist der längliche Querschnitt der Massenkanalwand entlang einer zweiten Querschnittsachse eine geringere Ausdehnung auf, als die Innenseite der Wickelwand, wodurch zwischen der Wickelwand und dem Massenkanal ein freier Querschnitt freigehalten ist. Insbesondere in diesem freien Querschnitt verläuft der Temperierkanal oder verlaufen die Temperierkanäle. Gegebenenfalls erstreckt sich der Massenkanal entlang einer ersten Querschnittachse, die im Wesentlichen normal zur zweiten Querschnittsachse verläuft, von einer Seite der Wickelwand bis zur gegenüberliegenden Seite der Wickelwand.

Bevorzugt sind durch die unterschiedliche Ausgestaltung der Wickelwand und der Massenkanalwand zwei freie Querschnitte freigehalten, sodass auch zwei Temperierkanäle vorgesehen sein können. Der erste Abschnitt jedes Temperierkanals und der zweite Abschnitt jedes Temperierkanals verlaufen dabei bevorzugt nebeneinander in je einem frei gehaltenen Querschnitt. Der längliche Querschnitt des Massenkanals ist bevorzugt oval oder elliptisch ausgebildet. Gegebenenfalls kann der längliche Kanal jedoch auch polygonförmig ausgebildet sein. Bevorzugt weist der längliche Querschnitt des Massenkanals eine Erstreckung von einer Seite der Wickelwand bis zur anderen Seite der Wickelwand auf.

Gegebenenfalls ist im Bereich des freien Endes des Rolldorns kein Temperierkanal mehr vorgesehen. Insbesondere kann das auskragende Ende schulterförmig abgesetzt sein und einen zumindest geringfügig kleineren Durchmesser aufweisen, als die Wickelwand. Der Temperierkanal endet somit gemäß einer bevorzugten Ausführungsform beabstandet vom freien Ende des Rolldorns. In diesem Bereich kann das Waffelband beispielsweise bereits soweit abgekühlt sein, dass eine zusätzliche Kühlung nicht notwendig ist.

Bevorzugt umfasst die Wickelvorrichtung eine um eine Nebenachse drehbare oder drehbar angetriebene Andrückwalze. Diese Andrückwalze umfasst insbesondere schraubenförmige Vertiefungen oder Erhebungen, die zur Begünstigung einer Förderbewegung des aufgerollten Waffelbandes entlang der Richtung der Hauptachse ausgestaltet sind.

Bevorzugt betrifft die Erfindung auch eine Backmaschine zur kontinuierlichen Herstellung von essbaren Waffelröllchen, die eine erfindungsgemäße Wickelvorrichtung umfasst.

Die Erfindung betrifft insbesondere auch eine Backmaschine zum Herstellen endloser Bänder aus vorzugsweise flüssigen Backmassen auf einem in einem Maschinengestell umlaufenden, zumindest abschnittsweise beheizten Backflächenträger, der zumindest eine endlose Backfläche durch zumindest eine im Maschinengestell stationär angeordnete, eine Heizvorrichtung enthaltende, von einer Backmassenauftragsvorrichtung bis zu einer Bandabnahmevorrichtung reichende Backzone transportiert, wobei bevorzugt eine drehbar gelagerte und angetriebene nabenlose Trommel als umlaufender beheizter Backflächenträger vorgesehen ist, und wobei eine Wickelvorrichtung zur kontinuierlichen Bildung einer Waffelrolle vorgesehen ist.

Die Erfindung betrifft auch insbesondere eine Vorrichtung zur Herstellung eines Hohlgebäcks zur Aufnahme einer weichen Füllmasse, beispielsweise einer Eiscreme einer zuckerhaltigen Fettcreme und/oder einer Schokoladencreme. Das Hohlgebäck, insbesondere das Waffelröllchen, ist bevorzugt aus einem schraubenförmig und überlappend gewickelten Gebäckband, gebildet.

In weiterer Folge wird die Erfindung anhand der Figuren weiter beschrieben, wobei
Fig. 1 eine Aufsicht auf eine erfindungsgemäße Backmaschine,
Fig. 2 eine schematische Schrägansicht der Wickelvorrichtung,
Fig. 3 eine schematische Schnittdarstellung der Wickelvorrichtung,
Fig. 4 einen Querschnitt des Rolldorns im Bereich der Wickelwand, und
die Figuren 5 und 6 zwei unterschiedliche Schnitte des Rolldorns zeigen.

Wenn nicht anders angegeben, so entsprechen die Bezugszeichen folgenden Komponenten: Wickelvorrichtung 1, Rolldorn 2, gelagerter Abschnitt (des Rolldorns) 3, auskragender Abschnitt (des Rolldorns) 4, Hauptachse 5, Wickelwand 6, Wickelfläche 7, Massenkanal 8, Temperierkanal 9, Massenkanalwand 10, erster Abschnitt (des Temperierkanals) 11, zweiter Abschnitt (des Temperierkanals) 12, freier Querschnitt 13, erste Querschnittsachse 14, zweite Querschnittsachse 15, Zuführringkammer 16,

Ableitringkammer 17, Andrückwalze 18, freies Ende (des Rolldorns) 19, Temperierkanalwand 20.

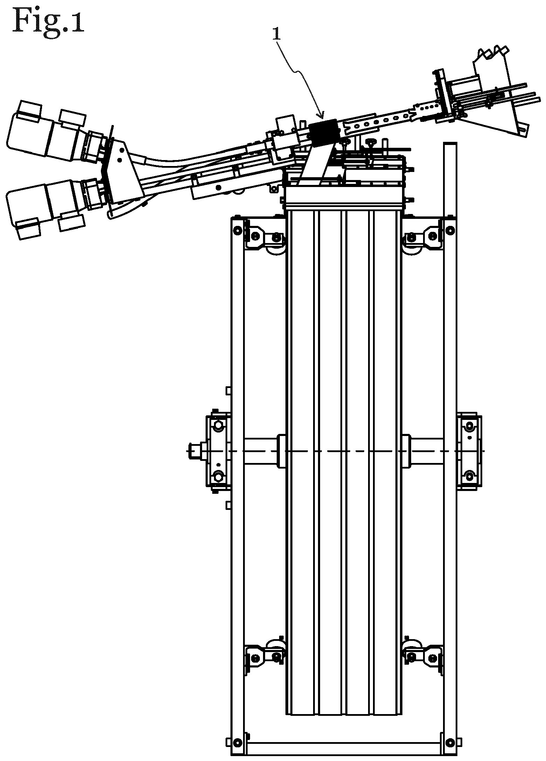

Fig. 1 zeigt eine schematische Aufsicht auf eine Backmaschine umfassend eine erfindungsgemäße Wickelvorrichtung 1. Insbesondere können mehrere Wickelvorrichtungen 1 zur Verarbeitung mehrerer Waffelbänder vorgesehen sein. Die Backmaschine kann mit Ausnahme der erfindungsgemäßen Wickelvorrichtung dem Stand der Technik entsprechend ausgebildet sein. Insbesondere kann auch die Zuführung der Masse in die Wickelvorrichtung gemäß herkömmlichen Vorrichtungen geschehen. Gegebenenfalls kann die Wickelvorrichtung einer herkömmlichen Backmaschine, insbesondere einer herkömmlichen Ringbackmaschine, durch die neu vorgeschlagene Wickelvorrichtung ersetzt werden.

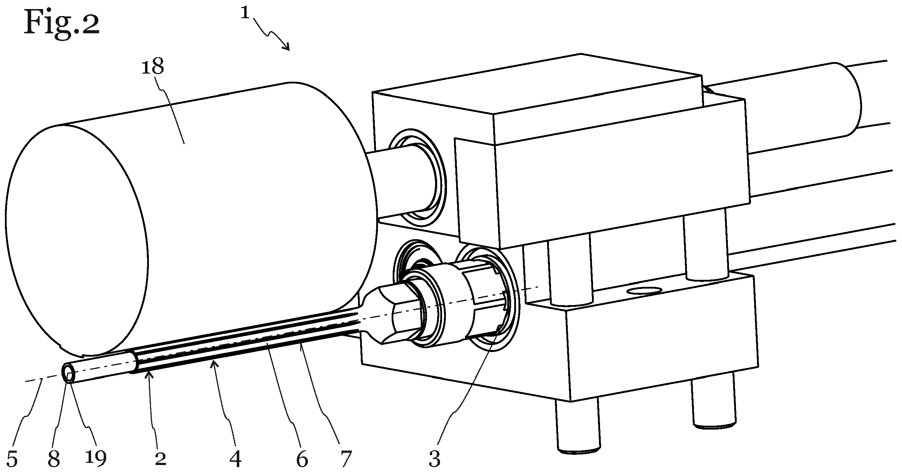

Fig. 2 zeigt eine Wickelvorrichtung 1 in einer schematischen Schrägansicht. Insbesondere kann diese Wickelvorrichtung 1 an herkömmlichen Ringbackmaschinen angebracht werden um eine verbesserte Herstellung von an ihrer Innenseite mit einer Masse versehenden Waffelröllchen zu ermöglichen.

Die Wickelvorrichtung 1 umfasst einen Rolldorn 2, der entlang einer Hauptachse 5 von einem gelagerten Abschnitt 3 zu einem auskragenden Abschnitt 4 verläuft. Durch die auskragende Ausgestaltung des Rolldorns 2 ist ein freies Ende 19 gebildet. Im Bereich des freien Endes 19 tritt der Massenkanal 8 aus dem Rolldorn 2 aus, womit auch die in dem Massenkanal 8 geförderte Masse austritt und in das Innere der Waffelrolle eingebracht werden kann. Der Rolldorn 2 ist in seinem auskragenden Abschnitt 4 zumindest abschnittsweise von einer Wickelwand 6 begrenzt. Die Wickelwand 6 bildet einen Teil des Rolldorns 2 im auskragenden Abschnitt 4. Außenliegend an der Wickelwand 6 ist eine zylindrische Wickelfläche 7 vorgesehen, die zur Anlage und Aufwicklung des warmen Waffelbands eingerichtet ist. Ferner umfasst die Wickelvorrichtung 1 eine Andrückwalze 18, die um eine Nebenachse drehbar und gegebenenfalls angetrieben, angeordnet ist. Ferner umfasst die Wickelvorrichtung 1 Anschlüsse zur Zuführung eines Temperiermediums und mindestens einen Anschluss zur Zuführung der Masse.

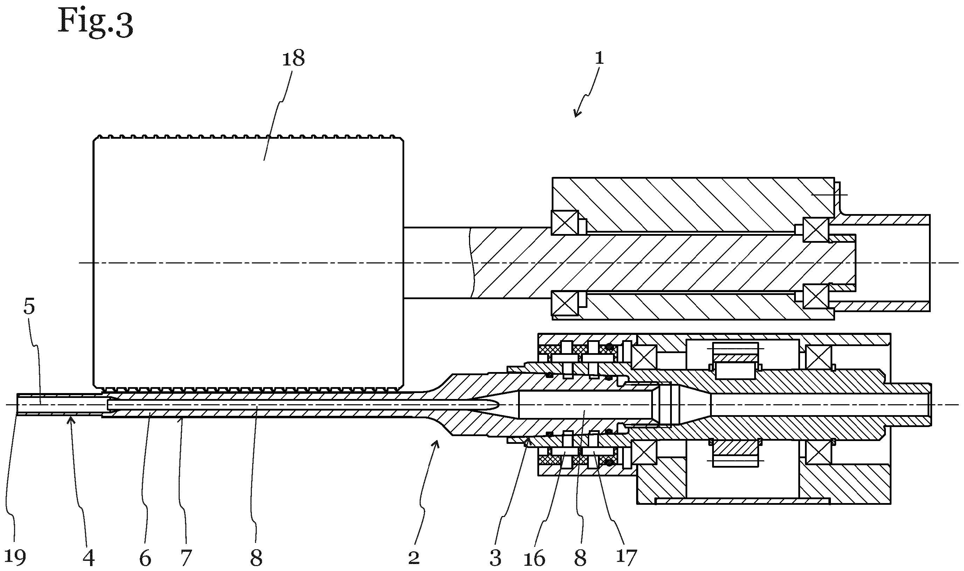

Fig. 3 zeigt eine Schnittdarstellung der Ausführungsform der Wickelvorrichtung 1 gemäß Fig. 2. Die Wickelvorrichtung 1 umfasst einen Rolldorn 2, der sich wiederum von einem gelagerten Abschnitt 3 zu einem auskragenden Abschnitt 4 erstreckt, wobei der auskragende Abschnitt 4 ein freies Ende 19 umfasst. Der Rolldorn 2 erstreckt sich insbesondere entlang einer Hauptachse 5. Der Rolldorn 2 ist zumindest teilweise von einer Wickelwand 6 begrenzt, die auf einer Außenseite eine Wickelfläche 7 trägt. Insbesondere ist die Wickelfläche 7 die Außenseite der Wickelwand 6. Im Inneren der Wickelwand 6 und insbesondere im Inneren des Rolldorns 2 ist ein Massenkanal 8 vorgesehen. Dieser Massenkanal 8 tritt im Bereich des freien Endes 19 des Rolldorns 2 aus, um die Masse ins Innere der Waffelrolle einbringen zu können. Der Massenkanal 8 erstreckt sich gemäß einer bevorzugten Ausführungsform im Wesentlichen mittig entlang der Hauptachse 5 durch den Rolldorn 2 und wird bevorzugt an seinem, dem auskragenden Abschnitt 4 gegenüberliegenden Ende, insbesondere im gelagerten Abschnitt 3, in axialer Richtung gespeist. Ferner ist ein in dieser Darstellung nicht sichtbarer Temperierkanal vorgesehen. Der Temperierkanal erstreckt sich, wie in den weiteren Figuren ersichtlich ist, durch Teile des Rolldorns 2. Der Temperierkanal wird im gelagerten Abschnitt 3 durch eine Ringkammer gespeist, wobei insbesondere eine Zuführringkammer 16 zur Zuführung des Temperiermediums und eine Ableitringkammer 17 zur Ableitung des Temperiermediums vorgesehen sind. Diese Ringkammern 16, 17 sind im Wesentlichen ortsfest an einem Grundkörper der Wickelvorrichtung 1 angeordnet und mit einem Temperiermedium wie beispielsweise mit einem Kühlmedium gefüllt. Insbesondere wird das Temperiermedium der Zuführringkammer 16 durch eine Pumpe zugeführt.

Ferner umfasst die Wickelvorrichtung 1 eine Andrückwalze 18, wobei zwischen der Andrückwalze 18 und dem Rolldorn 2 ein Wickelspalt freigehalten ist, in dem die Aufwicklung bzw. die Förderung des zu bildenden Waffelröllchens geschieht.

Der Rolldorn 2 ist bevorzugt über einen Antrieb drehbar, insbesondere um die Hauptachse 5 drehbar gelagert und angetrieben. Die Lagerung geschieht, beispielsweise wie in dieser Ausführungsform über zwei axial voneinander beabstandete Lager, insbesondere Kugellager. Die Zuführung des Temperiermediums kann beispielsweise durch zwei entlang der Hauptachse 5 beabstandete Ringkammern 16, 17 erfolgen.

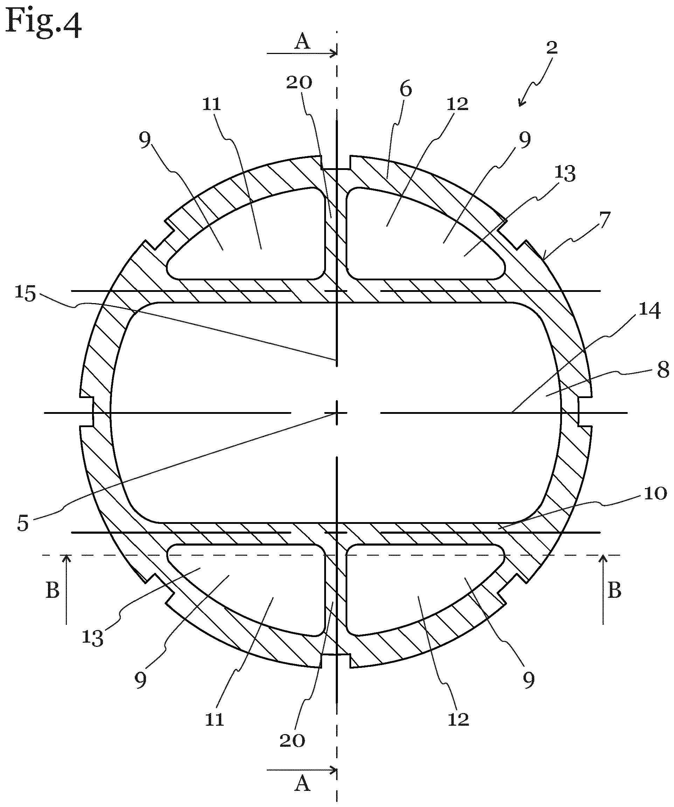

Fig. 4 zeigt einen Schnitt durch den Rolldorn 2 der Wickelvorrichtung 1 entlang einer Schnittebene, die im Bereich der Wickelwand 6 angeordnet ist, wobei die Hauptachse 5 in der Darstellung der Fig. 4 im Wesentlichen projizierend verläuft. Der Rolldorn 2 umfasst eine Wickelwand 6 mit einer außenliegenden Wickelfläche 7, die im Wesentlichen zylindrisch ausgebildet ist bzw. einen kreisrunden Querschnitt aufweist. Der kreisrunde Querschnitt kann in allen Ausführungsformen, wie auch bei dieser Ausführungsform, durch Einbuchtungen oder Ausmuldungen wie beispielsweise Nuten unterbrochen sein. Insgesamt ergibt sich jedoch eine im Wesentlichen kreisrunde bzw. zylindrische Form. Im Inneren des Rolldorns 2, insbesondere innenliegend innerhalb der Wickelwand 6, ist ein Massenkanal 8 vorgesehen. Der Massenkanal 8 ist durch eine Massenkanalwand 10 begrenzt. Ferner ist mindestens ein Temperierkanal 9 vorgesehen. In der vorliegenden Ausführungsform sind zwei Temperierkanäle 9 vorgesehen. Die Temperierkanäle 9 umfassen jeweils einen ersten Abschnitt 11 und einen zweiten Abschnitt 12, wobei der erste Abschnitt 11 beispielsweise zur Zuführung des Temperiermediums und der zweite Abschnitt 12 der rücklaufende Abschnitt beispielsweise zur Rückführung des Temperiermediums ist. Der Massenkanal 9, insbesondere die Massenkanalwand 10, weist einen länglichen Querschnitt auf. Der längliche Querschnitt ist in der vorliegenden Ausführungsform im Wesentlichen oval ausgebildet. Entlang einer ersten Querschnittsachse 14 erstreckt sich der Massenkanal 8 von einer Seite der Wickelwand 6 bis zur anderen Seite der Wickelwand 6. Entlang einer zweiten Querschnittsachse 15 ist der Massenkanal 8 und insbesondere auch die Massenkanalwand 10 beabstandet von den äußeren Bereichen der Wickelwand 6 angeordnet, wodurch mindestens ein, im vorliegenden Fall zwei freie Querschnitte 13 gebildet sind. Insbesondere in diesen freien Querschnitten 13 sind die Temperierkanäle 9 angeordnet. Die freien Querschnitte 13 weisen in der vorliegenden Ausführungsform eine im Wesentlichen kreissehnenförmige Gestalt auf und sind bevorzugt mittig durch eine Temperierkanalwand 20 unterbrochen, die insbesondere den ersten Abschnitt 11 des Temperierkanals 9 vom zweiten Abschnitt 12 des Temperierkanals 9 trennt. Die Temperierkanalwand 20 endet bevorzugt knapp vor der vollen Erstreckungslänge des Temperierkanals 9, sodass im auskragenden Bereich, insbesondere im Bereich der maximalen Entfernung des Temperierkanals 9 vom gelagerten Querschnitt, eine Öffnung vom ersten Abschnitt 11 zum zweiten Abschnitt 12 gebildet wird.

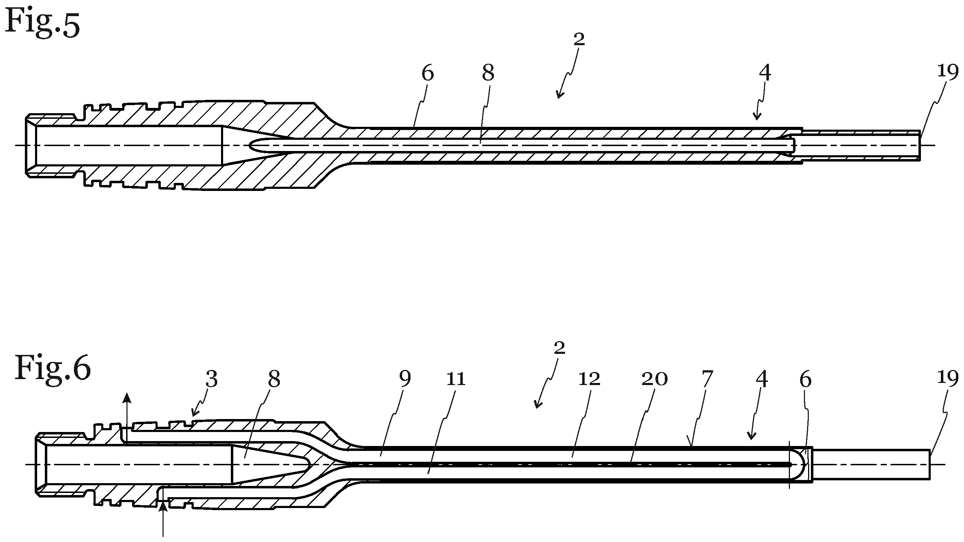

Fig. 5 zeigt eine schematische Schnittdarstellung eines Rolldorns 2 der Wickelvorrichtung 1, der insbesondere nach den vorangegangenen Figuren ausgebildet ist, wobei die Schnittebene im Wesentlichen entlang der in Fig. 4 der eingezeichneten zweiten Querschnittsachse 15 bzw. der Schnittfläche A-A verläuft. Der längliche Massenkanal 8 erstreckt sich bis an die Innenseite der Wickelwand 6. Im auskragenden Abschnitt 4 des Rolldorns 2, insbesondere im Bereich des freien Endes 19 des Rolldorns 2 ist ein Abschnitt mit verringertem Durchmesser vorgesehen. Dieser Abschnitt ist insbesondere frei von Temperierkanälen 9.

Fig. 6 zeigt eine weitere Schnittdarstellung eines Rolldorns 2, der insbesondere gemäß den vorangegangen Figuren ausgebildet ist, wobei die Schnittebene B-B im Wesentlichen parallel zur ersten Querschnittsachse 14 der Fig. 4 und insbesondere knapp neben der Massenkanalwand 10 verläuft. Der Rolldorn 2 umfasst einen Massenkanal 8 der im Bereich des freien Endes 19 aus dem Rolldorn 2 austritt. Ferner umfasst der Rolldorn 2 eine Wickelwand 6 mit einer außenliegenden Wickelfläche 7. Innerhalb der Wickelfläche 7 sind zwei Temperierkanäle 9 vorgesehen. Die Temperierkanäle 9 erstrecken sich jeweils vom gelagerten Bereich 3 des Rolldorns 2 in den auskragenden Abschnitt 4 des Rolldorns 2 und wieder zurück in den gelagerten Abschnitt 3 des Rolldorns 2. Die Zuführung des Temperiermediums in den Temperierkanal 9 geschieht insbesondere über eine, beispielsweise in Fig. 3 ersichtliche Zuführringkammer 16. Die Ableitung des Temperiermediums geschieht insbesondere über eine Ableitringkammer 17, die ebenfalls beispielsweise Fig. 3 zu entnehmen ist. Der Temperierkanal 9 erstreckt sich im gelagerten Abschnitt 3 des Rolldorns 2 im Wesentlichen radial oder schräg nach außen, wo auch eine Öffnung durch die äußere Wand des Rolldorns 3 erfolgt. Insbesondere mündet der Temperierkanal 9 bzw. diese Öffnung in die Zuführringkammer 16. Dadurch kann das Temperiermedium über die Zuführringkammer 16 in den ersten Abschnitt 11 des Temperierkanals 9 eingebracht werden. Von dort wird das Temperiermedium in dem Temperierkanal 9, bzw. in den Temperierkanälen 9 in den auskragenden Abschnitt des Rolldorns 2 gefördert. Im vorderen Bereich, insbesondere im vorderen Bereich des auskragenden Abschnitts 4 tritt das Temperiermedium vom ersten Abschnitt 11 des Temperierkanals 9 in den zweiten Abschnitt 12 des Temperierkanals 9 und wird wieder zurück vom auskragenden Abschnitt 4 des Rolldorns 2 in den gelagerten Abschnitt 3 des Rolldorns 2 gefördert. Im gelagerten Abschnitt 3 tritt der zweite Abschnitt 12 des Temperierkanals 9 im Wesentlichen in radialer Richtung oder schräg aus dem Rolldorn 2 aus, wobei im diesem Bereich die Ableitringkammer 17 vorgesehen ist, die eine Ableitung des Temperiermediums ermöglicht.

Gemäß einer nicht dargestellten Ausführungsform erstreckt sich ein Temperierkanal 9 zumindest abschnittsweise spiralförmig oder helixförmig von dem gelagerten Abschnitt 3 des Rolldorns 2 in den auskragenden Abschnitt 4 des Rolldorns 2 und wieder zurück in den gelagerten Abschnitt 3 des Rolldorns 2. Der Temperierkanal 9 ist ähnlich den anderen Ausführungsformen U-förmig ausgebildet, wobei aber dessen Verlauf nicht geradlinig, sondern spiralförmig bzw. helixförmig ausgebildet ist. Gegebenenfalls können mehrere Temperierkanäle 9 mit einer spiralförmigen Ausgestaltung vorgesehen sein.

Bei der spiralförmigen Ausführungsform kann beispielsweise vorgesehen sein, dass auch der Massenkanal 8 mit einem länglichen Querschnitt spiralförmig ausgebildet ist. Insbesondere kann ein derartiger Massenkanal 8 einen länglichen Querschnitt aufweisen, wobei sich der längliche Querschnitt entlang des Verlaufs der Hauptachse 5 neigt bzw. dreht. So weist der längliche Querschnitt eine erste Querschnittsachse 14 und eine zweite Querschnittsachse 15 auf, wobei der Massenkanal 8 entlang seiner ersten Querschnittsachse 14 eine größere Erstreckung aufweist, als entlang seiner zweiten Querschnittsachse 15. Entlang des Verlaufs der Hauptachse 5 werden diese Achsen verdreht, wodurch es zu einer spiralförmigen Ausgestaltung des Massenkanals 8 entlang der Hauptachse 5 kommt. Die Temperierkanäle 9 sind bevorzugt in den durch diese Drehung entlang der Hauptachse 5 entstehenden, spiralförmig ausgebildeten, freien Querschnitten 13 angeordnet.
Gemäß einer alternativen Ausgestaltung ist der Massenkanal 8 zentral angeordnet, insbesondere konzentrisch zur Wickelwand 6 bzw. zur Wickelfläche 7. In einem ringförmigen Bereich zwischen Massenkanalwand 10 und Wickelwand 6 erstreckt sich bei dieser Ausführungsform zumindest ein Temperierkanal 9, wobei bevorzugt zwei oder mehr Temperierkanäle 9 vorgesehen sein können. Diese Temperierkanäle 9 können in dem Bereich zwischen der Massenkanalwand 10 und der Wickelwand 6 geradlinig oder spiralförmig, und insbesondere U-förmig, verlaufen.
Gemäß einer bevorzugten Ausführungsform sind die Temperierkanäle 9 spiralförmig angeordnet, und umschlingen einen zentral angeordneten Massenkanal 8. Auch bei dieser Ausführungsform ist der Temperierkanal 9, bzw. sind die Temperierkanäle 9 U-förmig ausgebildet und erstrecken sich vom gelagerten Abschnitt 3 in den auskragenden Abschnitt 4 und wieder zurück in den gelagerten Abschnitt 3.

## Patentansprüche

1. Wickelvorrichtung (1) zum kontinuierlichen Herstellen von an ihrer Innenseite mit einer Masse wie beispielsweise einer essbaren Creme versehenen, essbaren Waffelröllchen,
- wobei die Wickelvorrichtung (1) einen entlang einer Hauptachse (5) verlaufenden Rolldorn (2) umfasst,
- wobei der Rolldorn (2) einen gelagerten Abschnitt (3) und einen auskragenden Abschnitt (4) mit einem freien Ende (19) umfasst,
- wobei der Rolldorn (2) in seinem auskragenden Abschnitt (4) quer zur Hauptachse (5) von einer zylindrischen Wickelwand (6) begrenzt ist,
- wobei die zylindrische Wickelwand (6) eine außenliegenden Wickelfläche (7) aufweist, die zur Anlage und zum Einrollen eines warmen, plastisch verformbaren Waffelbands eingerichtet ist und über die im Betrieb insbesondere durch die Anlage des Waffelbands ein Wärmetransport erfolgt,
- wobei im Inneren der zylindrischen Wickelwand (6) ein entlang der Hauptachse (5) verlaufender Massenkanal (8) zum Einbringen einer Masse in den Innenraum eines endlosen hülsenförmigen Hohlkörpers oder der Waffelröllchen vorgesehen ist, wobei der Massenkanal (8) im Bereich des freien Endes (19) aus dem Rolldorn (2) austritt, wobei der Massenkanal (8) von einer Massenkanalwand (10) begrenzt wird,
**dadurch gekennzeichnet, dass** im Inneren der zylindrischen Wickelwand (6) mindesten ein Temperierkanal (9) zur Leitung eines Temperiermediums, insbesondere eines Temperierfluids, vorgesehen ist, wobei sich der Temperierkanal (9) von dem gelagerten Abschnitt (3) des Rolldorns (2) in den auskragenden Abschnitt (4) des Rolldorns (2) und wieder zurück in den gelagerten Abschnitt (3) des Rolldorns (2) erstreckt.

2. Wickelvorrichtung (1) nach Anspruch 1, **dadurch gekennzeichnet, dass** der Temperierkanal (9) zwischen dem Massenkanal (8) und der Wickelwand (6) verläuft.

3. Wickelvorrichtung (1) nach Anspruch 1 oder 2, **dadurch gekennzeichnet,**
- **dass** der Temperierkanal (9) im Wesentlichen U-förmig ausgebildet ist und sich, insbesondere als geschlossene Leitung, von dem gelagerten Abschnitt (3) des Rolldorns (2) in den auskragenden Abschnitt (4) des Rolldorns (2) und wieder zurück in den gelagerten Abschnitt (3) des Rolldorns (2) erstreckt.

4. Wickelvorrichtung (1) nach einem der Ansprüche 1 bis 3, **dadurch gekennzeichnet,**
- **dass** der Temperierkanal (9) einen ersten Abschnitt (11) umfasst, der sich im Inneren der Wickelwand (6) entlang der Hauptachse (5) von dem gelagerten Abschnitt (3) des Rolldorns (2) in den auskragenden Abschnitt (4) des Rolldorns (2) erstreckt
- **dass** der Temperierkanal (9) einen dem ersten Abschnitt (11) nachgeordneten zweiten Abschnitt (12) umfasst, der sich im Inneren der Wickelwand (6) entlang der Hauptachse (5) von dem auskragenden Abschnitt (4) des Rolldorns (2) wieder zurück in den gelagerten Abschnitt (3) des Rolldorns (2) erstreckt.

5. Wickelvorrichtung (1) nach einem der Ansprüche 1 bis 4, **dadurch gekennzeichnet, dass** der Temperierkanal (9) zumindest teilweise von der Massenkanalwand (10) und von der Wickelwand (6) begrenzt oder gebildet ist.

6. Wickelvorrichtung (1) nach einem der Ansprüche 1 bis 5, **dadurch gekennzeichnet,**
- **dass** die Wickelwand (6) einen kreisförmigen oder kreisrunden Querschnitt aufweist,
- **dass** der Massenkanal (8) im Inneren der Wickelwand (6) einen konzentrisch zur Wickelwand (6) angeordneten runden Querschnitt aufweist,
- und **dass** der Temperierkanal (9) in dem freien, insbesondere ringförmig ausgebildeten, Querschnitt (13) zwischen der Massenkanalwand (10) des Massenkanals (8) und der Wickelwand (6) angeordnet ist.

7. Wickelvorrichtung (1) nach einem der Ansprüche 1 bis 5, **dadurch gekennzeichnet,**
- **dass** die Wickelwand (6) einen kreisförmigen oder kreisrunden Querschnitt aufweist,
- **dass** der Massenkanal (8) im Inneren der Wickelwand (6) einen länglichen Querschnitt aufweist,
- und **dass** der Temperierkanal (9) in dem freien Querschnitt (13) zwischen der Massenkanalwand (10) des Massenkanals (8) und der Wickelwand (6) angeordnet ist.

8. Wickelvorrichtung (1) nach einem der Ansprüche 1 bis 5, **dadurch gekennzeichnet,**
- **dass** die Wickelwand (6) einen kreisrunden oder kreisförmigen Querschnitt aufweist,
- **dass** der Massenkanal (8) und/oder die Massenkanalwand (10) im Bereich der Wickelwand (6) einen länglichen Querschnitt aufweist, wobei sich der längliche Querschnitt entlang einer ersten Querschnittsachse (14) von der einen Seite der Wickelwand (6) bis zur gegenüberliegenden Seite der Wickelwand (6) erstreckt, und wobei zwischen dem länglichen Querschnitt der Massenkanalwand (10) und der Wickelwand (6) entlang einer in der Querschnittsebene normal zur ersten Querschnittsachse (14) verlaufenden zweiten Querschnittsachse (15) ein freier Querschnitt (13) vorgesehen ist, in dem der Temperierkanal (9) angeordnet ist.

9. Wickelvorrichtung (1) nach einem der Ansprüche 1 bis 5, **dadurch gekennzeichnet,**
- **dass** die Wickelwand (6) einen kreisrunden oder kreisförmigen Querschnitt aufweist,
- **dass** der Massenkanal (8) und/oder die Massenkanalwand (10) im Bereich der Wickelwand (6) einen länglichen Querschnitt aufweist, wobei sich der längliche Querschnitt entlang einer ersten Querschnittsachse (14) von der einen Seite der Wickelwand (6) bis zur gegenüberliegenden Seite der Wickelwand (6) erstreckt, und wobei zwischen dem länglichen Querschnitt der Massenkanalwand (10) und der Wickelwand (6) entlang einer in der Querschnittsebene normal zur ersten Querschnittsachse (14) verlaufenden zweiten Querschnittsachse (15) ein freier Querschnitt (13) vorgesehen ist, in dem nebeneinander der Hauptachse (5) folgend der erste Abschnitt (11) und der zweite Abschnitt (12) des Temperierkanals (9) angeordnet sind.

10. Wickelvorrichtung (1) nach einem der Ansprüche 1 bis 9, **dadurch gekennzeichnet, dass** der Temperierkanal (9) zumindest abschnittsweise spiralförmig oder helixförmig zwischen der Massenkanalwand (10) des Massenkanals (8) und der Wickelwand (6) verläuft.

11. Wickelvorrichtung (1) nach einem der Ansprüche 1 bis 10, **dadurch gekennzeichnet,**
- **dass** im Inneren der zylindrischen Wickelwand (6) mindestens zwei Temperierkanäle (9) zur Leitung eines Temperiermediums vorgesehen sind, die beide nach einem der vorangegangenen Ansprüche ausgebildet sind.

12. Wickelvorrichtung (1) nach einem der Ansprüche 1 bis 5 und 7 bis 11, **dadurch gekennzeichnet,**
- **dass** im Inneren der zylindrischen Wickelwand (6) zwei Temperierkanäle (9) zur Leitung eines Temperiermediums vorgesehen sind, die beide nach einem der vorangegangenen Ansprüche ausgebildet sind,
- **dass** der Massenkanal (8) im Inneren der Wickelwand (6) einen länglichen Querschnitt aufweist,
- und **dass** die beiden Temperierkanäle (9) beidseitig des Massenkanals (8) in den freien Querschnitten (13) zwischen der Massenkanalwand (10) des Massenkanals (8) und der Wickelwand (6) angeordnet sind.

13. Wickelvorrichtung (1) nach einem der Ansprüche 1 bis 12, **dadurch gekennzeichnet,**
- **dass** der Rolldorn (2) um die Hauptachse (5) drehbar oder drehbar angetrieben angeordet ist,
- **dass** der Rolldorn (2) im Bereich seines gelagerten Abschnitts (3) von einer Zuführringkammer (16) zur Zuführung des Temperiermediums in den Temperierkanal (9) des drehenden Rolldorns (2) umgeben ist,
- und **dass** der Rolldorn (2) im Bereich seines gelagerten Abschnitts (3), beabstandet von der Zuführringkammer (16) von einer Ableitringkammer (17) zur Ableitung des Temperiermediums aus dem Temperierkanal (9) des drehenden Rolldorns (2) umgeben ist.

14. Wickelvorrichtung (1) nach einem der Ansprüche 1 bis 13, **dadurch gekennzeichnet,**
- **dass** der Temperierkanal (9) einen ersten Abschnitt (11) umfasst, der sich im Inneren der Wickelwand entlang der Hauptachse (5) von dem gelagerten Abschnitt (3) des Rolldorns (2) in den auskragenden Abschnitt (4) des Rolldorns (2) erstreckt,
- **dass** der Temperierkanal (9) einen dem ersten Abschnitt (11) nachgeordneten zweiten Abschnitt (12) umfasst, der sich im Inneren der Wickelwand entlang der Hauptachse (5) von auskragenden Abschnitt (4) des Rolldorns (2) wieder zurück in den gelagerten Abschnitt (3) des Rolldorns (2) erstreckt,
- **dass** sich der erste Abschnitt (11) bis in den gelagerten Abschnitt (3) des Rolldorns (2) erstreckt und dort in radialer Richtung oder schräg in die Zuführringkammer (16), mündet
- und **dass** sich der zweite Abschnitt (12) bis in den gelagerten Abschnitt (3) des Rolldorns (2) erstreckt und dort in radialer Richtung in die Ableitringkammer (17) mündet.

15. Wickelvorrichtung (1) nach einem der Ansprüche 1 bis 14, **dadurch gekennzeichnet, dass** eine um eine Nebenachse drehbare oder drehbar angetriebene Andrückwalze (18) vorgesehen ist.

16. **Backmaschine** zum kontinuierlichen Herstellen von essbaren Waffelröllchen mit zumindest einer, kontinuierlich umlaufenden, beheizten Backfläche zum Backen von zumindest einem, endlosen, im warmen Zustand plastisch verformbaren Waffelband aus flüssigem, zuckerhaltigem Waffelteig und mit einer Verarbeitungsstation, in der für jedes gebackene Waffelband jeweils eine der Backfläche benachbarte Abnahmevorrichtung, eine dieser Abnahmevorrichtung nachgeordnete Wickelvorrichtung (1) zum Erzeugen eines endlosen hülsenförmigen Hohlkörpers und eine der Wickelvorrichtung (1) nachgeordnete Schneidvorrichtung zum Ablängen des hülsenförmigen Hohlkörpers in einzelne Waffelröllchen vorgesehen ist, **dadurch gekennzeichnet, dass** die Wickelvorrichtung (1) nach einem der vorangegangenen Ansprüche ausgebildet ist.

17. Backmaschine nach Anspruch 16, **dadurch gekennzeichnet, dass** jede Wickelvorrichtung (1) einen zur Bahn des betreffenden gebackenen Waffelbandes schräg angeordneten Wickelspalt besitzt, der zwischen zwei gegensinnig rotierenden Wickelorganen ausgebildet ist, von denen ein Wickelorgan als Rolldorn (2) ausgebildet ist, um den herum das gebackene Waffelband schraubenförmig überlappend zu einem endlosen hülsenförmigen Hohlkörper gewickelt wird, und das andere Wickelorgan als Andrückwalze (18) ausgebildet ist, die das gebackene Waffelband gegen den rotierenden Rolldorn (2) drückt.

## Claims

1. A winding device (1) for the continuous production of edible wafer rolls provided on the inside with a substance such as an edible cream,
- wherein the winding device (1) includes a rolling mandrel (2) that extends along a main axis (5),
- wherein the rolling mandrel (2) includes a supported section (3) and a protruding section (4) having a free end (19),
- wherein the rolling mandrel (2) at its protruding section (4) is delimited by a cylindrical winding wall (6) transverse to the main axis (5),
- wherein the cylindrical winding wall (6) has an exterior winding surface (7) that is configured for contacting and rolling up a warm, plastically deformbable wafer strip, and via which heat transport takes place during operation, in particular by the contact of the wafer strip,
- wherein a substance channel (8) is provided inside the cylindrical winding wall (6), extending along the main axis (5), for introducing a substance into the interior of a continuous sleeve-shaped hollow body or the wafer rolls, wherein the substance channel (8) exits the rolling mandrel (2) in the area of the free end (19), wherein the substance channel (8) is delimited by a substance channel wall (10), **characterized in that** at least one temperature control channel (9) for conducting a temperature control medium, in particular a temperature control fluid, inside the cylindrical winding wall (6) is provided, wherein the temperature control channel (9) extends from the supported section (3) of the rolling mandrel (2) into the protruding section (4) of the rolling mandrel (2) and back into the supported section (3) of the rolling mandrel (2).

2. The winding device (1) according to Claim 1, **characterized in that** the temperature control channel (9) extends between the substance channel (8) and the winding wall (6).

3. The winding device (1) according to Claim 1 or 2, **characterized in that**
- the temperature control channel (9) has an essentially U-shaped design, and extends, in particular as a closed line, from the supported section (3) of the rolling mandrel (2) into the protruding section (4) of the rolling mandrel (2) and back into the supported section (3) of the rolling mandrel (2).

4. The winding device (1) according to one of Claims 1 to 3, **characterized in that**
- the temperature control channel (9) comprises a first section (11) that extends inside the winding wall (6), along the main axis (5), from the supported section (3) of the rolling mandrel (2) into the protruding section (4) of the rolling mandrel (2),
- the temperature control channel (9) comprises a second section (12), downstream from the first section (11), that extends inside the winding wall (6), along the main axis (5), from the protruding section (4) of the rolling mandrel (2) and back into the supported section (3) of the rolling mandrel (2).

5. The winding device (1) according to one of Claims 1 to 4, **characterized in that** the temperature control channel (9) is at least partially delimited or formed by the substance channel wall (10) and by the winding wall (6).

6. The winding device (1) according to one of Claims 1 to 5, **characterized in that**
- the winding wall (6) has a circular or round cross section,
- the substance channel (8) inside the winding wall (6) has a circular cross section situated concentrically with respect to the winding wall (6), and
- the temperature control channel (9) is situated in the free, in particular ring-shaped, cross section (13) between the substance channel wall (10) of the substance channel (8) and the winding wall (6).

7. The winding device (1) according to one of Claims 1 to 5, **characterized in that**
- the winding wall (6) has a circular or round cross section,
- the substance channel (8) inside the winding wall (6) has an elongated cross section, and
- the temperature control channel (9) is situated in the free cross section (13) between the substance channel wall (10) of the substance channel (8) and the winding wall (6).

8. The winding device (1) according to one of Claims 1 to 5, **characterized in that**
- the winding wall (6) has a circular or round cross section,
- the substance channel (8) and/or the substance channel wall (10) have/has an elongated cross section in the area of the winding wall (6), wherein the elongated cross section extends along a first cross-sectional axis (14) from one side of the winding wall (6) to the opposite side of the winding wall (6), and wherein a free cross section (13) in which the temperature control channel (9) is situated is provided between the elongated cross section of the substance channel wall (10) and the winding wall (6), along a second cross-sectional axis (15) that extends normal to the first cross-sectional axis (14) in the cross-sectional plane.

9. The winding device (1) according to one of Claims 1 to 5, **characterized in that**
- the winding wall (6) has a circular or round cross section,
- the substance channel (8) and/or the substance channel wall (10) have/has an elongated cross section in the area of the winding wall (6), wherein the elongated cross section extends along a first cross-sectional axis (14) from one side of the winding wall (6) to the opposite side of the winding wall (6), and wherein a free cross section (13), in which the first section (11) and the second section (12) of the temperature control channel (9) are adjacently situated, following the main axis (5), is provided between the elongated cross section of the substance channel wall (10) and the winding wall (6), along a second cross-sectional axis (15) that extends normal to the first cross-sectional axis (14) in the cross-sectional plane.

10. The winding device (1) according to one of Claims 1 to 9, **characterized in that** the temperature control channel (9) extends, at least in sections, in a spiral or helical shape between the substance channel wall (10) of the substance channel (8) and the winding wall (6).

11. The winding device (1) according to one of Claims 1 to 10, **characterized in that**
- at least two temperature control channels (9) for conducting a temperature control medium, both designed according to one of the preceding claims, are provided inside the cylindrical winding wall (6).

12. The winding device (1) according to one of Claims 1 to 5 and 7 to 11, **characterized in that**
- two temperature control channels (9) for conducting a temperature control medium, both designed according to one of the preceding claims, are provided inside the cylindrical winding wall (6),
- the substance channel (8) inside the winding wall (6) has an elongated cross section, and
- the two temperature control channels (9) are situated on each side of the substance channel (8), in the free cross sections (13) between the substance channel wall (10) of the substance channel (8) and the winding wall (6).

13. The winding device (1) according to one of Claims 1 to 12, **characterized in that**
- the rolling mandrel (2) is rotatable or is rotatably driven about the main axis (5),
- the rolling mandrel (2) in the area of its supported section (3) is enclosed by an annular supply chamber (16) for supplying the temperature control medium into the temperature control channel (9) of the rotating rolling mandrel (2), and
- the rolling mandrel (2) in the area of its supported section (3), at a distance from the annular feed chamber (16), is enclosed by an annular discharge chamber (17) for discharging the temperature control medium from the temperature control channel (9) of the rotating rolling mandrel (2).

14. The winding device (1) according to one of Claims 1 to 13, **characterized in that**
- the temperature control channel (9) comprises a first section (11) that extends inside the winding wall, along the main axis (5), from the supported section (3) of the rolling mandrel (2) into the protruding section (4) of the rolling mandrel (2),
- the temperature control channel (9) comprises a second section (12), downstream from the first section (11), that extends inside the winding wall, along the main axis (5), from the protruding section (4) of the rolling mandrel (2) back into the supported section (3) of the rolling mandrel (2),
- the first section (11) extends up to the supported section (3) of the rolling mandrel (2), and at that location opens radially or obliquely into the annular feed chamber (16), and
- the second section (12) extends up to the supported section (3) of the rolling mandrel (2), and at that location opens radially into the annular discharge chamber (17).

15. The winding device (1) according to one of Claims 1 to 14, **characterized in that** a pressure roller (18) that is rotatable or is rotatably driven about the secondary axis is provided.

16. A baking machine for the continuous production of edible wafer rolls, having at least one continuously revolving, heated baking surface for baking at least one continuous wafer strip that is made of liquid, sugar-containing wafer dough that is plastically deformable in the warm state, and having a processing station in which a removal device that adjoins the baking surface, a winding device (1), situated downstream from this removal device, for producing a continuous sleeve-shaped hollow body, and a cutting device, situated downstream from the winding device (1), for cutting the sleeve-shaped hollow body into individual wafer rolls, are provided for each baked wafer strip, **characterized in that** the winding device (1) is designed according to one of the preceding claims.

17. The baking machine according to Claim 16, **characterized in that** each winding device (1) has a winding gap, situated at an angle to the path of the baked wafer strip in question, that is formed between two oppositely rotating winding elements, one of the winding elements being designed as a rolling mandrel (2) around which the baked wafer strip is wound in a helically overlapping manner to form a continuous sleeve-shaped hollow body, and the other winding element being designed as a pressure roller (18) that presses the baked wafer strip against the rotating rolling mandrel (2).

## Revendications

1. Dispositif d'enroulement (1) pour la production en continu de gaufrettes roulées comestibles, munies sur leur face intérieure d'une substance telle qu'une crème comestible par exemple,
- dans lequel le dispositif d'enroulement (1) comprend un mandrin de roulage (2) s'étendant le long d'un axe principal (5),
- dans lequel le mandrin de roulage (2) comprend une partie montée sur paliers (3) et une partie en saillie (4) avec une extrémité libre (19),
- dans lequel le mandrin de roulage (2) est limité dans sa partie en saillie (4) transversalement à l'axe principal (5) par une paroi d'enroulement (6) cylindrique,
- dans lequel la paroi d'enroulement (6) cylindrique présente une surface d'enroulement (7) extérieure, agencée pour appliquer et enrouler une bande de gaufrette chaude pouvant subir une déformation plastique, et permet en cours de fonctionnement un transfert de chaleur, en particulier par l'application de la bande de gaufrette,
- dans lequel, à l'intérieur de la paroi d'enroulement (6) cylindrique, est prévu un conduit de substance (8) s'étendant le long de l'axe principal (5) pour introduire une substance à l'intérieur d'un corps creux sans fin en forme de douille ou des gaufrettes roulées, le conduit de substance (8) sortant au niveau de l'extrémité libre (19) du mandrin de roulage (2), le conduit de substance (8) étant limité par une paroi de conduit de substance (10),
**caractérisé en ce qu'**à l'intérieur de la paroi d'enroulement (6) cylindrique est prévu au moins un conduit d'équilibrage de température (9) pour canaliser un milieu d'équilibrage de température, en particulier d'un fluide d'équilibrage de température, le conduit d'équilibrage de température (9) s'étendant de la partie montée sur paliers (3) du mandrin de roulage (2) dans la partie en saillie (4) du mandrin de roulage (2) et de nouveau dans la partie montée sur paliers (3) du mandrin de roulage (2).

2. Dispositif d'enroulement (1) selon la revendication 1, **caractérisé en ce que** le conduit d'équilibrage de température (9) s'étend entre le conduit de substance (8) et la paroi d'enroulement (6).

3. Dispositif d'enroulement (1) selon la revendication 1 ou 2, **caractérisé**
- **en ce que** le conduit d'équilibrage de température (9) est réalisé de manière substantiellement en forme de U et s'étend, en particulier sous forme de circuit fermé, de la partie montée sur paliers (3) du mandrin de roulage (2) dans la partie en saillie (4) du mandrin de roulage (2) et de nouveau dans la partie montée sur paliers (3) du mandrin de roulage (2).

4. Dispositif d'enroulement (1) selon l'une quelconque des revendications précédentes 1 à 3, **caractérisé**
- **en ce que** le conduit d'équilibrage de température (9) comprend une première partie (11) s'étendant à l'intérieur de la paroi d'enroulement (6) le long de l'axe principal (5) de la partie montée sur paliers (3) du mandrin de roulage (2) dans la partie en saillie (4) du mandrin de roulage (2),
- **en ce que** le conduit d'équilibrage de température (9) comprend une deuxième partie (12) placée en aval de la première partie (11) et s'étendant à l'intérieur de la paroi d'enroulement (6) le long de l'axe principal (5) de la partie en saillie (4) du mandrin de roulage (2) de nouveau dans la partie montée sur paliers (3) du mandrin de roulage (2).

5. Dispositif d'enroulement (1) selon l'une quelconque des revendications 1 à 4, **caractérisé en ce que** le conduit d'équilibrage de température (9) est au moins partiellement limité ou formé par la paroi de conduit de substance (10) et par la paroi d'enroulement (6).

6. Dispositif d'enroulement (1) selon l'une quelconque des revendications 1 à 5, **caractérisé**
- **en ce que** la paroi d'enroulement (6) présente une section transversale circulaire ou ronde,
- **en ce que** le conduit de substance (8) à l'intérieur de la paroi d'enroulement (6) présente une section transversale ronde disposée de manière concentrique par rapport à la paroi d'enroulement (6), et
- **en ce que** le conduit d'équilibrage de température (9) est disposé dans la section transversale (13) libre, en particulier réalisée en forme d'anneau entre la paroi de conduit de substance (10) du conduit de substance (8) et la paroi d'enroulement (6).

7. Dispositif d'enroulement (1) selon l'une quelconque des revendications 1 à 5, **caractérisé**
- **en ce que** la paroi d'enroulement (6) présente une section transversale circulaire ou ronde,
- **en ce que** le conduit de substance (8) présente à l'intérieur de la paroi d'enroulement (6) une section transversale allongée, et
- **en ce que** le conduit d'équilibrage de température (9) est disposé dans la section transversale (13) libre entre la paroi de conduit de substance (10) du conduit de substance (8) et la paroi d'enroulement (6).

8. Dispositif d'enroulement (1) selon l'une quelconque des revendications 1 à 5, **caractérisé**
- **en ce que** la paroi d'enroulement (6) présente une section transversale ronde ou circulaire,
- **en ce que** le conduit de substance (8) et/ou la paroi de conduit de substance (10) présente une section transversale allongée au niveau de la paroi d'enroulement (6), dans lequel la section transversale allongée s'étend le long d'un premier axe de section transversale (14) depuis un côté de la paroi d'enroulement (6) jusqu'au côté opposé de la paroi d'enroulement (6), et dans lequel, entre la section transversale allongée de la paroi de conduit de substance (10) et la paroi d'enroulement (6), le long d'un deuxième axe de section transversale (15) s'étendant perpendiculairement au premier axe de section transversale (14) dans le plan de section transversale, une section transversale libre (13) est prévue dans laquelle est disposé le conduit d'équilibrage de température (9).

9. Dispositif d'enroulement (1) selon l'une quelconque des revendications 1 à 5, **caractérisé**
- **en ce que** la paroi d'enroulement (6) présente une section transversale ronde ou circulaire,
- **en ce que** le conduit de substance (8) et/ou la paroi de conduit de substance (10) présentent au niveau de la paroi d'enroulement (6) une section transversale allongée, dans lequel la section transversale allongée s'étend le long d'un premier axe de section transversale (14) depuis un côté de la paroi d'enroulement (6) jusqu'au côté opposé de la paroi d'enroulement (6), et dans lequel, entre la section transversale allongée de la paroi de conduit de substance (10) et la paroi d'enroulement (6), le long d'un deuxième axe de section transversale (15) s'étendant perpendiculairement au premier axe de section transversale (14) dans le plan de section transversale, une section transversale (13) libre est prévue dans laquelle la première partie (11) et la deuxième partie (12) du conduit d'équilibrage de température (9) sont disposées côte à côte en suivant l'axe principal (5).

10. Dispositif d'enroulement (1) selon l'une quelconque des revendications 1 à 9, **caractérisé en ce que** le conduit d'équilibrage de température (9) s'étend au moins par endroits en spirale ou en hélice entre la paroi de conduit de substance (10) du conduit de substance (8) et la paroi d'enroulement (6).

11. Dispositif d'enroulement (1) selon l'une quelconque des revendications 1 à 10, **caractérisé**
- **en ce qu'**à l'intérieur de la paroi d'enroulement (6) cylindrique, au moins deux conduits d'équilibrage de température (9) sont prévus pour canaliser un milieu d'équilibrage de température, tous les deux réalisés selon l'une quelconque des revendications précédentes.

12. Dispositif d'enroulement (1) selon l'une quelconque des revendications 1 à 5 et 7 à 11, **caractérisé**
- **en ce qu'**à l'intérieur de la paroi d'enroulement (6) cylindrique, deux conduits d'équilibrage de température (9) pour canaliser un milieu d'équilibrage de température sont prévus, tous les deux réalisés selon l'une quelconque des revendications précédentes,
- **en ce que** le conduit de substance (8) présente une section transversale allongée à l'intérieur de la paroi d'enroulement (6), et
- **en ce que** les deux conduits d'équilibrage de température (9) sont disposés des deux côtés du conduit de substance (8) dans les sections transversales (13) libres entre la paroi de conduit de substance (10) du conduit de substance (8) et la paroi d'enroulement (6).

13. Dispositif d'enroulement (1) selon l'une quelconque des revendications 1 à 12, **caractérisé**
- **en ce que** le mandrin de roulage (2) est disposé de manière à pouvoir tourner ou être entraîné en rotation autour de l'axe principal (5),
- **en ce que** le mandrin de roulage (2) est entouré au niveau de sa partie montée sur paliers (3) d'une chambre annulaire d'amenée (16) pour amener le milieu d'équilibrage de température dans le conduit d'équilibrage de température (9) du mandrin de roulage (2) tournant, et
- **en ce que** le mandrin de roulage (2) est entouré au niveau de sa partie montée sur paliers (3), à distance de la chambre annulaire d'amenée (16), d'une chambre annulaire d'évacuation (17) pour évacuer le milieu d'équilibrage de température hors du conduit d'équilibrage de température (9) du mandrin de roulage (2) tournant.

14. Dispositif d'enroulement (1) selon l'une quelconque des revendications 1 à 13, **caractérisé**
- **en ce que** le conduit d'équilibrage de température (9) comprend une première partie (11) s'étendant à l'intérieur de la paroi d'enroulement le long de l'axe principal (5) de la partie montée sur paliers (3) du mandrin de roulage (2) dans la partie en saillie (4) du mandrin de roulage (2),
- **en ce que** le conduit d'équilibrage de température (9) comprend une deuxième partie (12) placée en aval de la première partie (11) et s'étendant à l'intérieur de la paroi d'enroulement le long de l'axe principal (5) depuis la partie en saillie (4) du mandrin de roulage (2) de nouveau dans la partie montée sur paliers (3) du mandrin de roulage (2),
- **en ce que** la première partie (11) s'étend jusque dans la partie montée sur paliers (3) du mandrin de roulage (2) et y débouche dans la chambre annulaire d'amenée (16), dans la direction radiale ou en oblique, et
- **en ce que** la deuxième partie (12) s'étend jusque dans la partie montée sur paliers (3) du mandrin de roulage (2) et y débouche dans la chambre annulaire d'évacuation (17) dans la direction radiale.

15. Dispositif d'enroulement (1) selon l'une quelconque des revendications 1 à 14, **caractérisé en ce qu'**un cylindre-presseur (18) pouvant tourner ou être entraîné en rotation autour d'un axe secondaire est prévu.

16. Machine de cuisson pour la production en continu de gaufrettes roulées comestibles avec au moins une surface de cuisson chauffée, tournant en continu, pour cuire au moins une bande de gaufrette sans fin, pouvant à l'état chaud subir une déformation plastique, composée d'une pâte de gaufrette liquide et sucrée, et avec une station de traitement dans laquelle, pour chaque bande de gaufrette cuite, respectivement un dispositif de prélèvement adjacent à la surface de cuisson, un dispositif d'enroulement (1) disposé en aval de ce dispositif de prélèvement pour produire un corps creux sans fin en forme de douille, et un dispositif de découpe disposé en aval du dispositif d'enroulement (1) pour découper le corps creux en forme de douille en gaufrettes roulées individuelles sont prévus, **caractérisée en ce que** le dispositif d'enroulement (1) est réalisé selon l'une quelconque des revendications précédentes.

17. Machine de cuisson selon la revendication 16, **caractérisée en ce que** chaque dispositif d'enroulement (1) dispose d'une fente d'enroulement disposée en oblique par rapport au trajet de la bande de gaufrette cuite concernée, ladite fente étant réalisée entre deux éléments d'enroulement tournant en sens inverse, dont un élément d'enroulement est réalisé sous forme de mandrin de roulage (2) autour duquel la bande de gaufrette cuite est enroulée en forme de spirale avec recouvrement en un corps creux sans fin en forme de douille, et l'autre élément d'enroulement est réalisé comme un cylindre-presseur (18) pressant la bande de gaufrette cuite sur le mandrin de roulage (2) tournant.
